Europäisches Patentamt

European Patent Office

Office européen des brevets

(11) Veröffentlichungsnummer: **0 303 838**
**A2**

## (12) EUROPÄISCHE PATENTANMELDUNG

(21) Anmeldenummer: **88111635.4**

(22) Anmeldetag: **20.07.88**

(51) Int. Cl.⁴: **B01D 53/26 , B60T 17/00**

(30) Priorität: **19.08.87 DE 3727603**

(43) Veröffentlichungstag der Anmeldung:
**22.02.89 Patentblatt 89/08**

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Jenner, Klaus**
**Marbacher Strasse 96**
**D-7140 Ludwigsburg(DE)**
Erfinder: **Strobel, Günther**
**Wiesenäckerstrasse 23/2**
**D-7257 Ditzingen(DE)**

(54) **Druckluftaufbereitungseinrichtung für Druckluftsysteme.**

(57) Es wird eine Druckluftaufbereitungseinrichtung für Druckluftsysteme, insbesondere für Druckluftbremsanlagen, angegeben, die ein Schaltventil (41) aufweist, mittels welchem ein Lufttrockner (12) aus seiner Betriebsstellung zum Trocknen von Druckluft in einen Regenerationsbetrieb zum Entfeuchten des Trocknungsmittels umsteuerbar ist, in welchem der Lufttrockner (12) an einem Regenerationsluftspeicher (18) angeschlossen ist. Zur zuverlässigen Umschaltung des Lufttrockners (12) zwecks mehrfacher Regeneration des Trocknungsmittels, was eine größere Taupunktabsenkung zur Folge hat, ist das Schaltventil (41) an dem Auslaß (14) des Lufttrockners (12) angeschlossen und wird bei Erreichen eines oberen und unteren Druckgrenzwertes im Regenerationsluftspeicher (18) umgeschaltet. Eine Verriegelungsvorrichtung (38,39) blockiert die Umschaltung des Lufttrockners (12) unabhängig von dem in dem Regenerationsluftspeicher (18) herrschenden Druck, solange der Spanndruck des Druckluftsystems nicht erreicht und ein diesen Spanndruck überwachender Druckregler (22) eingeschaltet ist.

Fig.1

## Druckluftaufbereitungseinrichtung für Druckluftsysteme

Stand der Technik

Die Erfindung betrifft eine Druckluftaufbereitungseinrichtung für Druckluftsysteme, insbesondere für Druckluftbremsanlagen von Nutzfahrzeugen, der im Oberbegriff des Anspruchs 1 angegebenen Gattung.

Bei solchen Druckluftaufbereitungseinrichtungen wird die Leerlaufphase des die Druckluft fördernden Kompressors dazu ausgenutzt, das im Luftbehälter vorhandene Trocknungsmittel durch Feuchtigkeitsentzug zu regenerieren. Hierzu wird der Lufttrockner über seinen Steuereingang so umgeschaltet, daß der Einlaß des Lufttrockners an einen Entlüftungsausgang angeschlossen wird. Die im Regenerationsluftspeicher während des Normalbetriebs des Luftrockners gespeicherte getrocknete Regenerationsluft durchströmt damit den Lufttrockner in umgekehrte Richtung, um am Entlüftungsausgang ins Freie auszutreten, und entzieht bei Durchströmen des Lufttrockners dem Trocknungsmittel Feuchtigkeit.

Bei einer bekannten Druckluftaufbereitungsvorrichtung dieser Art (DE-OS 35 04 884) ist hierzu der pneumatische Steuereingang zum Umschalten des Lufttrockners über eine Steuerleitung an dem Ausgang des Druckreglers angeschlossen, der die den Schaltzustand des Druckreglers kennzeichnenden pneumatischen Ein- bzw. Aussignale führt. Der Druckregler ist dabei über eine Druckluftleitung mit dem Auslaß des Lufttrockners verbunden und schaltet bei einem Druck am Lufttrocknerauslaß von etwa 8 bar ab und bei einem Druck von etwa 7,2 bar wieder ein. In der Abschaltphase wird der mit der Steuerleitung verbundene Ausgang des Druckreglers belüftet. Diese das Aussignal bildende Schaltluft gelangt an den Steuereingang des Lufttrockners und schaltet diesen in den Regenerationsbetrieb um. Zur Erzielung einer Mehrfachregenerierung des Lufttrockners, und der damit verbundenen schnelleren und besseren Regeneration des Trocknungsmittels im Lufttrockner, ist das in Abhängigkeit vom Druck im Regenerationsluftspeicher gesteuerte Schaltventil in die Steuerleitung eingeschaltet.

Bei Druckreglern mit Doppelsitzventil und einer Schaltspanne von etwa 0,8 bar hat sich gezeigt, daß durch die direkte Ansteuerung des Steuereingangs des Lufttrockners mit der Schaltluft am Ausgang des in Abschaltphase sich befindenden Druckreglers die Schaltluft vom Ausgang des Druckreglers so schnell abgezogen wird, daß die zum Offenhalten des Doppelsitzventils erforderliche maximale Druckdifferenz zwischen dem mit dem Auslaß des Lufttrockners verbundenen Steuereingang und dem mit der Steuerleitung verbundenen Ausgang des Druckreglers erheblich überschritten wird und damit das Einlaßventil des Doppelsitzventils wieder unmittelbar schließt. Die für die Mehrfachregeneration zur Verfügung stehende Schaltspanne des Druckreglers, das ist die Druckdifferenz zwischen dem Abschaltpunkt des Druckreglers und dem Wiedereinschaltpunkt des Druckreglers, kann damit nur zum Teil ausgenutzt werden. Diese Zeitspanne ist aber für eine gute Regeneration des Trocknungsmittels nicht ausreichend.

Vorteile der Erfindung

Die erfindungsgemäße Druckluftaufbereitungseinrichtung mit den kennzeichnenden Merkmalen des Anspruchs 1 hat demgegenüber den Vorteil, daß der Druckregler die Schaltluft zum Umschalten des Lufttrockners nicht direkt sondern indirekt schaltet. Die Schaltluft selbst wird aus dem Druckluftvorrat am Auslaß des Lufttrockners abgezogen. Der Druckregler hebt lediglich die Wirkung der Verriegelungsvorrichtung auf, sobald er aus seiner Einschaltphase in seine Ausschaltphase umschaltet, in welcher der mit der Verriegelungsvorrichtung verbundene Ausgang des Druckreglers belüftet wird. Die Verriegelungsvorrichtung hat einen pneumatischen leistungsarmen Steuereingang, so daß bei Druckreglern mit dem eingangs beschriebenen Doppelsitzventil die maximal zulässige Druckdifferenz nicht überschritten wird. Die bekannten Druckregler können damit bei der erfindungsgemäßen Druckluftaufbereitungseinrichtung weiterhin eingesetzt werden, wobei für den Regenerationsbetrieb die volle Schaltspanne des Druckreglers von 0,8 bar ausgenutzt wird. Die Verriegelungsvorrichtung selbst verhindert ein Belüften des Steuereingangs des Lufttrockners während des Normal- oder Trocknungsbetriebs des Lufttrockners, da der Einschaltdruck des Druckreglers noch über dem oberen Druckgrenzwert für das Schaltventil zur Mehrfachumschaltung des Lufttrockners liegt. Bei Ausfall der elektrischen Einrichtung schaltet die Vorrichtung automatisch in Leerlauf und damit den Lufttrockner auf Regenerationsbetrieb. Die Druckluftversorgung des Druckluftsystems hat Priorität, so daß bei Luftbedarf im Druckluftsystem schlagartig auf Normalbetrieb, d.h. Trocknungsbetrieb des Lufttrockners, umgeschaltet wird.

Durch die in den weiteren Ansprüchen aufgeführten Maßnahmen sind vorteilhafte Weiterbildungen und Verbesserungen der im Anspruch 1 angegebenen Druckluftaufbereitungseinrichtung möglich.

Bei einer bevorzugten Ausführungsform der Erfindung besteht die Verriegelungsvorrichtung aus einem Druckschalter und einer Steuerlogik. Das Schaltventil ist als 3/2-Wegemagnetventil mit Federrückstellung ausgebildet, und am Regenerationsluftspeicher ist mindestens ein dem Speicherdruck erfassender Druckschalter angeschlossen. Vorzugsweise sind zwei Druckschalter vorhanden. Die Schaltschwelle des einen Druckschalters ist auf den oberen und die Schaltwelle des anderen Druckschalters ist auf den unteren Druckgrenzwert eingestellt. Die Steuerlogik verknüpft die Ausgangssignale der Druckschalter und generiert das Schaltsignal für das 3/2-Wegemagnetventil.

In einer anderen Ausführungsform der Erfindung ist das Schaltventil als pneumatisches 3/2-Wegeventil mit Schalthysterese ausgebildet, das bei Überschreiten des oberen Druckgrenzwertes auf Belüftung des Steuereingangs des Lufttrockners umschaltet und bei Unterschreiten des unteren Druckgrenzwertes auf Entlüften des Steuereingangs des Lufttrockners zurückschaltet. Hier besteht die Verriegelungsvorrichtung aus einem einfachen Druckschalter und aus einem von dem Druckschalter gesteuerten 3/2-Wegemagnetventil, das in die Verbindungsleitung zwischen dem pneumatisch gesteuerten 3/2-Wegeventil und dem Auslaß des Lufttrockners eingeschaltet ist und die Verbindungsleitung unterbricht, solange der Druckregler sich in seiner Einschaltphase befindet.

Eine Einsparung von Bauelementen und kurze Verbindungsleitungen zwischen den einzelnen Ventilen ergibt sich, wenn nach einer weiteren Ausführungsform der Erfindung der Druckregler in den Lufttrockner selbst integriert wird.

Zeichnung

Die Erfindung ist anhand von in der Zeichnung dargestellten Ausführungsbeispielen in der nachfolgenden Beschreibung näher erläutert. Es zeigen:

Fig. 1 ein Blockschaltbild einer Druckluftaufbereitungseinrichtung für eine Druckluftbremsanlage,

Fig. 2 einen Längsschnitt eines Druckreglers der Druckluftaufbereitungseinrichtung in Fig. 1,

Fig. 3 ein Schaltbild einer konventionellen Ausführung einer Steuerlogik der Druckluftaufbereitungseinrichtung in Fig. 1,

Fig. 4 bis 6 jeweils ein Blockschaltbild der Druckluftaufbereitungseinrichtung gemäß einem zweiten, dritten und vierten Ausführungsbeispiel.

Beschreibung der Ausführungsbeispiele

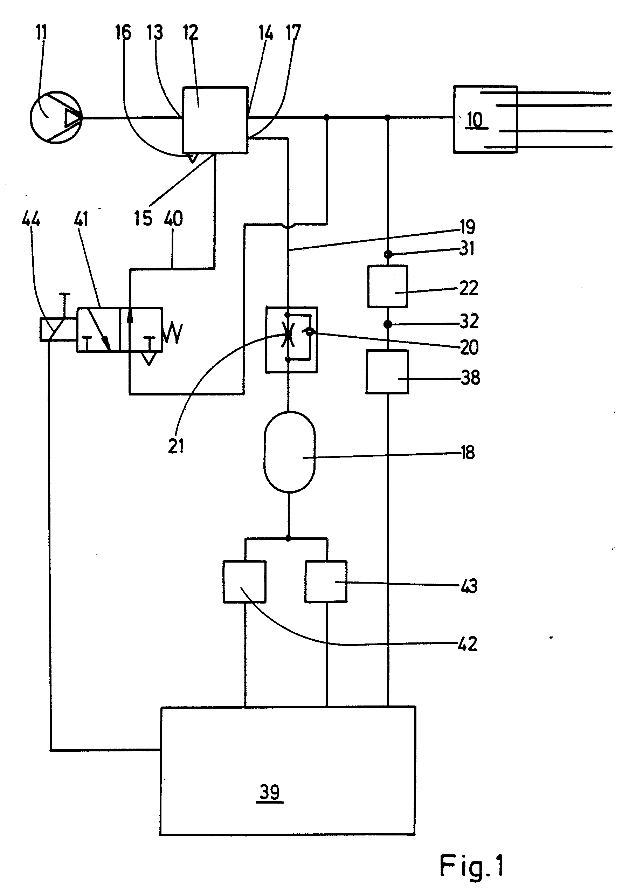

Die in Fig. 1 schematisch im Blockschaltbild dargestellte Druckluftaufbereitungseinrichtung dient der Versorgung von Druckluftsystemen, hier einer Druckluftbremsanlage für Nutzfahrzeuge, mit Druckluft. Die hier nicht dargestellten Druckluft-Vorratsbehälter der Druckluftbremsanlage werden über ein an sich bekanntes Vierkreis-Schutzventil 10 gefüllt, an dem zwei Betriebsbremskreise, ein Feststellbrems- und Anhängerkreis und ein Nebenverbraucherkreis angeschlossen sind.

Die Druckluftaufbereitungseinrichtung weist einen Luftkompressor 11 und einen Lufttrockner 12 mit Einlaß 13, Auslaß 14, Steuereingang 15 und Entlüftungsausgang 16 auf. Der als Einbehälter-Lufttrockner ausgebildete Lufttrockner 12 ist von bekannter Bauart, wie sie beispielsweise in der DE-OS 35 04 884 beschrieben ist. Die am Einlaß 13 eintretende, vom Luftkompressor 11 geförderte Druckluft durchströmt einen mit einem Trocknungsmittel gefüllten Behälter und tritt über ein Rückschlagventil am Auslaß 14 des Lufttrockners 14 aus. Beim Durchströmen des Trocknungsmittels wird der Druckluft ein wesentlicher Teil ihrer Feuchtigkeit entzogen. Zugleich wird ein Regenerationsluftspeicher 18, der über eine Druckluftleitung 19 mit dem Anschluß 17 des Lufttrockners 12 verbunden ist, von der getrockneten Druckluft gespannt. In der Druckluftleitung 19 ist ein Rückschlagventil 20 mit zum Regenerationsluftspeicher 18 hin weisende Durchflußrichtung und eine zum Rückschlagventil 20 parallelen Drossel 21 angeordnet. Zum Regenerieren des Lufttrockners 12 kann dieser über seinen Steuereingang 15 so umgeschaltet werden, daß sein Einlaß 13 mit dem Entlüftungsausgang 16 verbunden ist. Dadurch kann Luft aus dem Regenerationsluftspeicher 18 über die Drossel 21 in nunmehr entgegengesetzter Strömungsrichtung das Trocknungsmittel im Behälter des Lufttrockners 12 durchströmen und am Entlüftungsausgang 16 in die Atmosphäre austreten. Die das Trocknungsmittel durchströmende getrocknete Regenerationsluft entzieht dem Trocknungsmittel Feuchtigkeit, wodurch letzteres regeneriert wird.

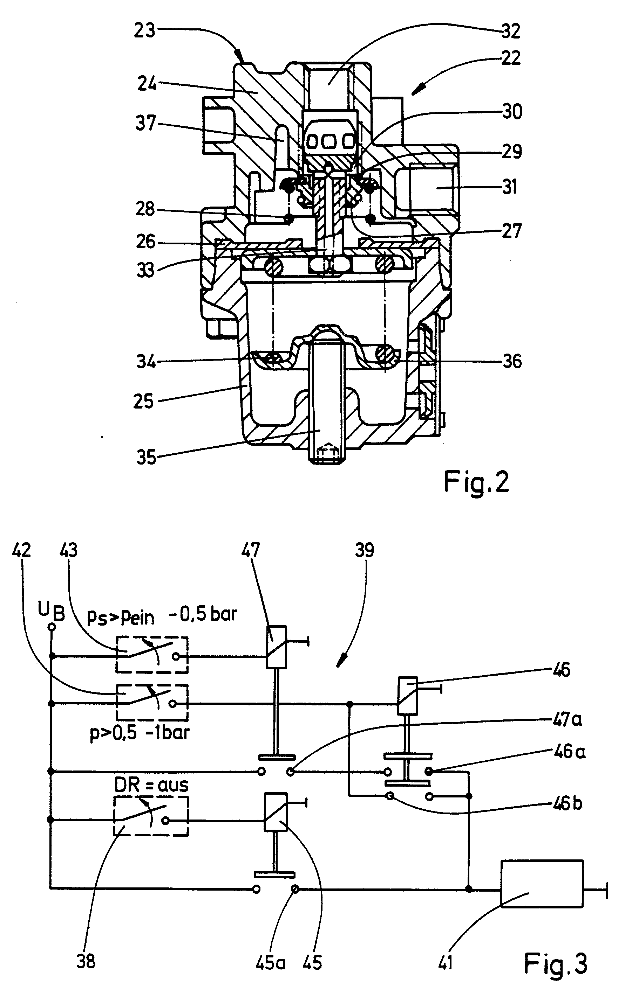

An dem mit dem Eingang des Vierkreis-Schutzventils 10 verbundenen Auslaß 14 des Lufttrockners 12 ist ein Druckregler 22 angeschlossen. Auch dieser Druckregler 22 ist von bekannter Bauart, die beispielsweise in der DE-OS 33 08 547 beschrieben ist. Ein Längsschnitt des hier verwendeten Druckreglers 22 ist in Fig 2. dargestellt. Er weist ein zweiteiliges Ventilgehäuse 23, bestehend aus einem Grundkörper 24 und einem Gehäusedeckel 25, die unter Zwischenlage eine Dichtung 26 miteinander verschraubt sind, auf. Ein Ventilglied 27 preßt sich unter der Wirkung einer Rückstellfeder 28 auf einen Ventilsitz 29 auf, der eine Durchlaßöffnung 30 zwischen einem mit dem Auslaß 14 des Lufttrockners 12 verbundenen Eingang 31 des Druckreglers 22 und einem Ausgang 32 des Druckreglers 22 angeordnet ist. Mit dem Ventilglied 27 ist ein Steuerkolben 33 starr verbunden, auf dessen Vorderseite sich die Rückstellfeder 28 abstützt und dessen Rückseite von einer Einstellfeder 34 belastet ist, die sich an einem mit einer Einstellschraube 35 verbundenen Federteller 36 abstützt und deren Vorspannung über die Einstellschraube 35 justierbar ist. An dem Steuerkolben 33 ist die zwischen Grundkörper 24 und Gehäusedeckel 25 des Reglergehäuses 23 gehaltene Membran 26 eingespannt. Rückstellfeder 28, Einstellfeder 34 und die vom Druck im Ventilraum 37 zwischen Eingang 31 und Durchlaßöffnung 30 beaufschlagten Flächen von Steuerkolben 33 und Ventilglied 27 sind so abgestimmt, daß der Druckregler 22 bei einem über den Eingang 31 eingesteuerten Druck am Auslaß 14 des Lufttrockners 12 von 8 bar öffnet und von 7,2 bar wieder schließt. Im Öffnungszustand des Druckreglers 22 hebt das Ventilglied 27 vom Ventilsitz 29 ab und Druckluft gelangt an den Ausgang 32 des Druckreglers 22.

An dem Ausgang des Druckreglers 22 ist ein Druckschalter 38 angeschlossen. Dieser ist so ausgebildet, daß er in der Einschaltphase des Druckreglers 22, wenn das Ventilglied 27 auf dem Ventilsitz 29 aufliegt und der Ausgang 32 unbelüftet ist, geschlossen ist und in der Abschaltphase des Druckreglers 22, also wenn das Ventilglied 27 von dem Ventilsitz 29 abgehoben wird und der Ausgang 32 belüftet ist, öffnet. Der Druckschalter 38 ist elektrisch mit einer Steuerlogik 39 verbunden, wie diese in einer konventionellen Bauart in Fig. 3 im Schaltbild dargestellt ist.

Der Steuereingang 15 des Lufttrockners 12 ist über eine Steuerleitung 40 mit dem Auslaß 14 des Lufttrockners 12 verbunden. In der Steuerleitung 40 ist ein Schaltventil 41, das hier als 3/2-Wegemagnetventil mit Federrückstellung ausgebildet ist, angeordnet. Das Schaltventil 41 wird von der Steuerlogik 39 angesteuert. Dabei ist das Schaltventil 41 so ausgebildet, daß der Steuereingang 15 des Lufttrockners 12 in dessen unerregten Grundstellung mit dem Auslaß 14 des Lufttrockners 12 verbunden und in dessen erregten Schaltstellung entlüftet ist. An dem Regenerationsluftspeicher 18 sind noch zwei Druckschalter 42 und 43 mit unterschiedlicher Schaltschwelle angeschlossen. Beide Druckschalter 42 und 43 sind als Öffner ausgebildet, wobei der erste Druckschalter 42 bei Überschreiten eines unteren Druckgrenzwertes im Regenerationsluftspeicher 18 und der zweite Druckschalter 43 bei Überschreiten eines oberen Druckgrenzwertes im Regenerationsluftspeicher 18 öffnet. Der untere Druckgrenzwert lieg dabei zwischen 0,5 und 1 bar und der obere Druckgrenzwert ist um 0,5 bar kleiner als der Einschaltdruck des Druckreglers 22 gewählt, der hier etwa 7,2 bar beträgt. Die beiden Druckschalter 42 und 43 sind elektrisch mit der Steuerlogik 39 verbunden. Die Steuerlogik 39 ist nunmehr so ausgebildet, daß sie durch Verknüpfung der Ausgangssignale der Druckschalter 38,42 und 43 in einer fest vorgegebenen Weise die Erregerwicklung 44 des Schaltventils 41 bestromt oder abschaltet. Die Verknüpfung ist dabei so ausgelegt, daß bei eingeschaltetem Druckregler 22 das Schaltventil 41 stets bestromt wird, so daß der Steuereingang 15 im Normal- oder Trocknungsbetrieb des Lufttrockners 12 entlüftet ist. Druckschalter 38 und Steuerlogik 39 bilden dabei eine Verriegelungsvorrichtung, die unabhängig von dem Ausgangssignal der beiden an dem Regenerationsluftspeicher 18 angeschlossenen Druckschalter 42,43 das Schaltventil 41 bestromt und damit in seiner Umschaltstellung verriegelt, solange der Druckregler 22 eingeschaltet ist. Bei abgeschaltetem Druckregler 22 wird das Schaltventil 41 bestromt, wenn der Druck im Regenerationsluftspeicher 18 unter den unteren Druckgrenzwert absinkt, und wird wieder abgeschaltet, sobald der Druck im Regenerationsluftspeicher 18 den oberen Druckgrenzwert übersteigt. Im letzteren Fall wird dadurch der Steuereingang 15 des Lufttrockners 12 mit dem Auslaß 14 des Lufttrockners 12 verbunden und damit belüftet. Der Entlüftungsausgang 16 des Lufttrockners 12 wird aufgesteuert und der Lufttrockner 12 in seinen Regenerationsbetrieb umgeschaltet.

Der Aufbau der Steuerlogik 39 in Relaistechnik ist in Fig. 3 dargestellt. Mit einer Gleichspannungsquelle $U_B$ ist ein erste Relais 45 über den an dem Druckregler 22 angeschlossenen Druckschalter 38, ein zweites Relais 46 über den an dem Regenerationsluftspeicher 18 angeschlossenen ersten Druckschalter 42 und ein drittes Relais 47 über den an den Regenerationsluftspeicher 18 angeschlossenen zweiten Druckschalter 43 verbunden. Der Schaltkontakt 45a des ersten Relais 45 liegt in Reihe mit der Erregerwicklung 44 des Schaltventils 41 an der Gleichspannungsquelle $U_B$. Der Schaltkontakt 47a des dritten Relais 47 und der Schaltkontakt 46a des zweiten Relais 46 sind in Reihe geschaltet und liegen einerseits an der Gleichspannungsquelle $U_B$ und andererseits an der Erregerwicklung 44 des Schaltventils 41. Das zweite Schaltrelais 46 weist noch einen zweiten Schaltkontakt 46b zur Herstellung einer Selbsthalteschaltung für das Relais 46 auf, der einerseits mit dem Eingang der Relaiswicklung des Relais 46 und andererseits mit dem schaltventilseitigen Anschluß des Schaltkontaktes 46a verbunden ist. Alle Relais 45 sind so ausgebildet, daß die Schaltkontakte 45a, 46a, 46b und 47a bei unbestromten Relaiswicklungen geöffnet und bei bestromten Relaiswicklungen geschlossen sind.

Die Wirkungsweise der Druckluftaufbereitungseinrichtung 12 in Verbindung mit der Steuerlogik 39 gemäß Fig. 3 ist wie folgt:

Solange der Druck am Ausgang 14 des Lufttrockners 12 kleiner ist als 8 bar, befindet sich der Druckregler 22 in seiner Einschaltphase, und der Druckschalter 38 ist unbelüftet und damit geschlossen. Das Relais 45 ist erregt und der Relaiskontakt 45a geschlossen. Das Schaltventil 41 wird bestromt und schaltet in seine Arbeitsstellung um, in welcher der Steuereingang 15 des Lufttrockners 12 entlüftet ist. Der Lufttrockner 12 arbeitet im Trocknungsbetrieb, d.h. die vom Luftkompressor 11 geförderte Druckluft durchströmt den Lufttrockner 12 von seinem Einlaß 13 zu dem Auslaß 14 und wird dabei getrocknet und gelangt zu dem Vierkreis-Schutzventil 10. Ist ein Druck von 7 bar erreicht, so öffnet das Vierkreis-Schutzventil 10 und getrocknete Druckluft strömt in die Vorratsbehälter der Druckluftbremsanlage. Gleichzeitig gelangt auch Druckluft in den Regenerationsluftspeicher 18. Übersteigt hier der Druck den unteren Druckgrenzwert von 0,5 bis 1 bar, so öffnet der Druckschalter 42, und übersteigt der Druck den oberen Druckgrenzwert, der 0,5 bar unter dem Einschaltdruck des Druckreglers von 7,2 bar liegt, so öffnet der Druckschalter 43. Die Relais 46 und 47 sind damit unbestromt und ihre Schaltkontakte 46a,46b und 47a geöffnet.

Da der Luftkompressor 11 weiter Luft fördert, steigt der Betriebsdruck weiter an. Bei einem Ausgangsdruck des Lufttrockners 12 von 8 bar schaltet der Druckregler 22 in seine Abschaltphase um, wodurch der mit dem Druckschalter 38 verbundene Ausgang des Druckreglers 22 belüftet wird. Damit öffnet der Druckschälter 38 und das Relais 45 fällt ab. Der Schaltkontakt 45a öffnet und das Schaltventil 41 wird abgeschaltet. Unter der Wirkung der Rückstellfeder geht das Schaltventil 41 in seine Grundstellung zurück, in welcher es den Ausgang 14 des Lufttrockners 12 mit dessen Steuereingang 15 verbindet. Der Lufttrockner 12 wird in seinen Regenerationsbetrieb umgeschaltet. Getrocknete Luft aus dem Regenerationsluftspeicher 18 durchströmt nunmehr den Lufttrockner 12 und entzieht dem Trocknungsmittel Feuchtigkeit.

Sobald der Druck im Regenerationsluftspeicher 18 den oberen Druckgrenzwert unterschreitet, schließt der Druckschalter 43 und das Relais 47 wird bestromt, wodurch der Schaltkontakt 47a schließt. Sinkt der Druck im Regenerationsluftbehälter 18 weiter bis unter den unteren Druckgrenzwert ab, so schließt auch der Druckschalter 42 und das Relais 46 wird bestromt. Die Schaltkontakte 46a und 46b schließen, wodurch über den geschlossenen Schaltkontakt 47a des Relais 47 einerseits die Erregerwicklung 44 des Schaltventils 41 mit der Gleichspannung $U_B$ verbunden und andererseits die Selbsthalteschaltung des Relais 46 wirksam wird. Das Schaltventil 41 schaltet um und der Steuereingang 15 des Lufttrockners 12 wird entlüftet. Damit wird der Lufttrockner 12 in Trocknungsbetrieb umgeschaltet. Die vom Luftkompressor 11 geförderte und vom Lufttrockner 12 getrocknete Druckluft spannt den Regenerationsluftspeicher 18 erneut, wobei bei Überschreiten des unteren Druckgrenzwertes der Druckschalter 42 öffnet. Infolge der Selbsthalteschaltung bleibt aber das Relais 46 bestromt. Übersteigt der Druck im Regenerationsluftspeicher 18 den oberen Druckgrenzwert, so öffnet auch der Druckschalter 47, das Relais 46 fällt ab und der Schaltkontakt 47a unterbricht die Bestromung des Schaltventils 41. Das Schaltventil 41 schaltet in seine Grundstellung zurück, der Steuereingang 15 des Lufttrockners 12 wird vom Auslaß 14 her, belüftet und der Lufttrockner 12 schaltet wieder in den Regenerationsbetrieb um. Dieser Zyklus wiederholt sich laufend, wobei eine sehr gute Regeneration des Trocknungsmittels im Lufttrocknr 12 erreicht wird.

Wird in der Druckluftbremsanlage ein Verbraucher eingeschaltet und sinkt dabei der Druck am Ausgang des Lufttrockners 14 unter den Einschaltdruck des Druckreglers 22 ab, so schließt der Druckschalter 38 und durch Bestromen des Schaltventils 41 wird der Regenerationsbetrieb des Lufttrockners 12 abgebrochen und der Trocknungsbetrieb des Lufttrockners 12 hergestellt.

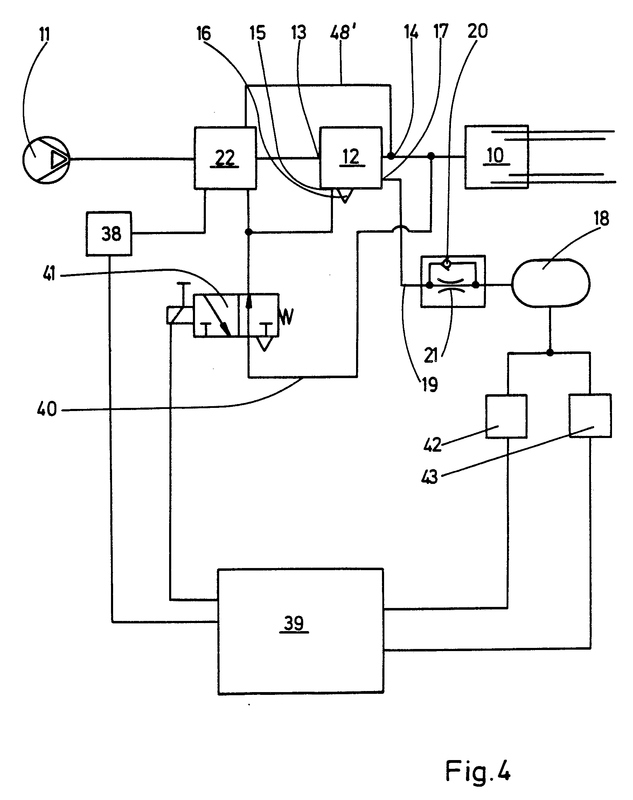

Das in Fig. 4 dargestellte Ausführungsbeispiel einer Druckluftaufbereitungseinrichtung stimmt weitgehend mit der in Fig. 1 überein, so daß gleiche Bauteile mit gleichen Bezugzeichen versehen sind. Im Unterschied zu der Druckluftaufbereitungseinrichtung nach Fig. 1 ist hier der Druckregler 22' nicht am Ausgang 14 des Lufttrockners 12 angeschlossen sondern zwischen Luftkompressor 11 und Einlaß 13 des Lufttrockners 12 eingeschaltet. Der Druckregler 22' ist etwa modifiziert und erfaßt den Druck am Ausgang 14 des Lufttrockners über eine Anschlußleitung 48'. Die Wirkungsweise dieser Druckluftaufbereitungseinrichtung ist identisch wie zu Fig. 1 beschrieben.

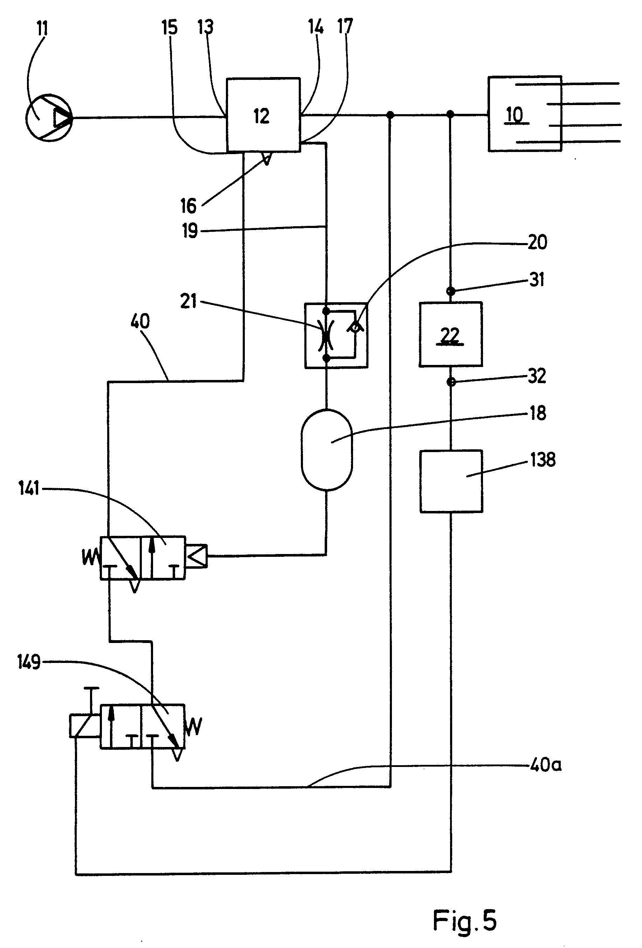

Bei dem Ausführungsbeispiel der Druckluftaufbereitungseinrichtung in Fig. 5 ist das Schaltventil 141 als pneumatisch gesteuertes 3/2-Wegeventil mit Federrückstellung ausgebildet, dessen pneumatischer Steuereingang an dem Regenerationsluftspeicher 18 angeschlossen ist. Das Schaltventil 141 weist eine Schalthysterese auf, deren eine Schaltschwelle dem unteren Druckgrenzwert und dessen andere Schaltschwelle dem oberen Druckgrenzwert entspricht, so daß das Schaltventil 141 bei einem pneumatischen Steuerdruck, der den oberen Druckgrenzwert übersteigt, umschaltet und die Steuerleitung 40 zwischen dem Auslaß 14 und dem Steuereingang 15 des Lufttrockners 12 schließt und bei einem Steuerdruck, der kleiner ist als der untere Druckgrenzwert, durch die Rückstellfeder in seine Grundstellung zurückschaltet, in welcher der Steuereingang 15 des Lufttrockners 12 entlüftet ist. In dem den Auslaß 14 des Lufttrockners 12 mit dem Schaltventil 141 verbindenden Leitungsabschnitt 40a der Steuerleitung 40 ist ein 3/2-Wegemagnetventil 149 angeordnet, das durch den Druckschalter 138 gesteuert wird. Der wiederum an dem Ausgang des Druckreglers 22 angeschlossene Druckschalter 138 bildet zusammen mit dem 3/2-Wegemagnetventil 149 die bereits in Fig. 1 angesprochene Verriegelungsvorrichtung, die ebenso wie dort das Belüften des Steuereingangs 15 des Lufttrockners 12 durch das Schaltventil 141 unabhängig vom Druck im Regenerationsluftspeicher 18 solange blockiert, wie der Druckregeler 22 eingeschaltet ist und ein pneumatisches Einsignal an den Druckregler 38 liefert. Das 3/2-Wegemagnetventil 149 ist derart ausgebildet, daß es den Anschluß des Schaltventils 141 in seiner unbestromten Grundstellung entlüftet und in seiner bestromten Arbeitsstellung mit dem Ausgang 14 des Lufttrockners 12 verbindet. Der Druckschalter 138 ist dahingehend modifiziert, daß er bei einem Einsignal des Druckreglers 22, also unbelüftetem Ausgang 32, offen ist und bei abgeschaltetem Druckregler 22, also belüftetem Ausgang 32, schließt. Das Schaltventil 141 entlüftet in seiner Grundstellung den Steuereingang 15 und verbindet in seiner umgesteuerten Arbeitsstellung den Steuereingang 15 mit dem Anschluß des 3/2-Wegemagnetventils 149.

Solange der Druck am Ausgang des Lufttrockners 12 kleiner ist als 8 bar nimmt das 3/2-Wegemagnetventil 149 die in Fig.5 dargestellte Grundstellung ein. Unabhängig davon, in welcher Schaltstellung sich das Schaltventil 141 infolge des Druckniveaus im Regenerationsluftspeicher 18 befindet, ist der Steuereingang 15 des Lufttrockners 12 entlüftet, so daß der Lufttrockner sich in Trocknungsbetrieb befindet. Erreicht der Ausgangsdruck des Lufttrockners 12 den Wert von 8 bar, so schaltet der Druckregler 22 ab und der Druckschalter 138 wird belüftet. Dieser schließt, so daß die Erregerwicklung des 3/2-Wegemagnetventils 149 bestromt wird. Letzteres schaltet in seine Arbeitsstellung um und verbindet den Anschluß des Schaltventils 141 mit dem Ausgang 14 des Lufttrockners 12. Je nach Schaltstellung des Schaltventils 141 wird nunmehr der Steuereingang 15 des Lufttrockners 12 belüftet, so daß der Lufttrockner 12 in seinen Regenerationsbetrieb umschaltet, oder entlüftet, so daß der Lufttrockner 12 wieder in den Trocknungsbetrieb zurückschaltet. Die Belüftung des Steuereingangs 15 erfolgt dann, wenn der Druck im Regenerationsluftspeicher 18 den oberen Druckgrenzwert überschreitet, und die Entlüftung des Steuereingangs 15 erfolgt, sobald der Druck im Regenerationsluftspeicher 18 den unteren Druckgrenzwert unterschreitet. Der obere Druckgrenzwert ist wiederum um etwa 0,5 bar unter den Einschaltdruck des Druckreglers 22, hier 7,2 bar, gelegt, während der untere Druckgrenzwert wiederum zwischen 0,5 und 1 bar liegt.

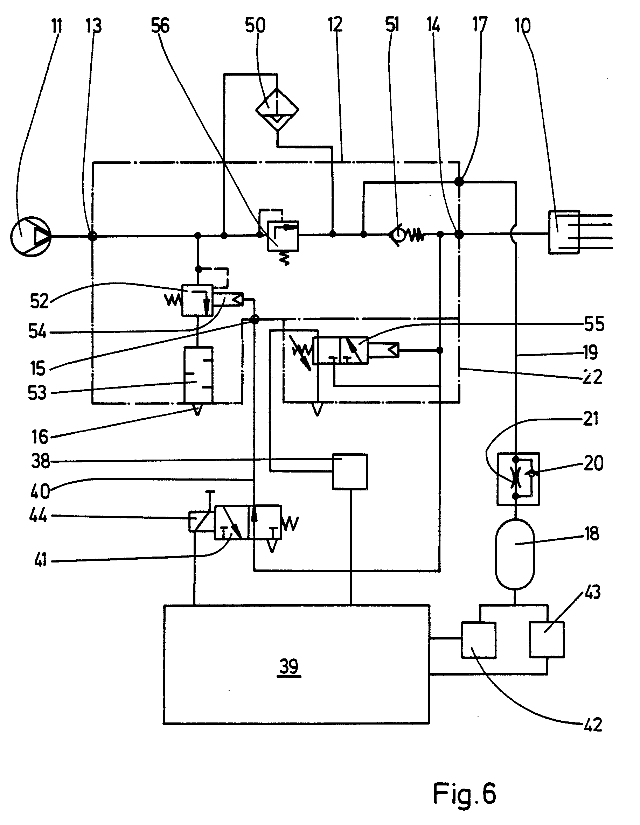

Bei dem in Fig. 6 dargestellten Ausführungsbeispiel der Druckluftaufbereitungseinrichtung ist der Druckregler 22 in den Lufttrockner 12 selbst integriert. Lufttrockner 12 und Druckregelventil 22, die eine Baueinheit bilden, sind in Fig. 6 im Schaltungsdetail dargestellt. Wie zu sehen ist, ist der das Trocknungsmittel enthaltende Behälter 50 in Reihe mit einem Rückschlagventil 51 zwischen dem Einlaß 13 und dem Auslaß 14 des Lufttrockners 12 angeordnet. Der Anschluß 17 für die Druckluftleitung 19 zum Regenerationsluftbehälter 18 ist mit dem Ausgang des Behälters 15 bzw. mit dem Eingang des Rückschlagventils 51 verbunden. Am Einlaß 13 des Lufttrockners 13 ist ein Druckbegrenzungsventil 52 angeschlossen, dessen Ausgang über einen Schalldämpfer 53 mit dem Entlüftungsausgang 16 verbunden ist. Das Druckbegrenzungsventil 52 weist einen zusätzlichen pneumatischen Steuereingang 54 auf, der den Steuereingang 15 des Lufttrockners 12 bildet. Der Druckregler 22 besteht aus einem pneumatisch steuerbaren 3/2-Wegeventil 55 mit einstellbarer Federrückstellung, dessen einer Anschluß zusammen mit dem pneumatischen Steuereingang an dem Auslaß 14 des Lufttrockners 12 angeschlossen ist. Der zweite Anschluß des 3/2-Wegeventils 55 ist mit dem Druckschalter 38 verbunden, während der dritte Anschluß entlüftet ist. In der in Fig. 6 dargestellten ungeschalteten Grundstellung des 3/2-Wegeventils 55 ist der Eingang des Druckschalters 38 entlüftet. Erreicht der Druck am Auslaß 14 des Lufttrockners 12 den Abschaltdruck des Druckreglers 25 von 8 bar, so wird das 3/2-Wegeventil 55 umgesteuert und der Druckschalter 38 belüftet. Unterschreitet der Druck am Auslaß 14 des Lufttrockners 12 den Einschaltdruck des Druckreglers 22 von 7,2 bar, so wird das 3/2-Wegeventil 55 durch die Rückstellfeder wieder zurückgestellt und der Druckschalter 38 entlüftet.

Der Ausgang des Druckschalters 38 ist ebenso wie die Ausgänge der an den Regenerationsluftspeicher 18 angeschlossenen Druckschalter 42 und 43 wiederum der Steuerlogik 39 zugeführt, die in der bereits beschriebenen Weise das als 3/2-Wegemagnetventil ausgebildete Schaltventil 41 in der den Auslaß 14 des Lufttrockners 12 mit dem Steuereingang 15 des Lufttrockners 12 verbindenden Steuerleitung 40 ansteuert. Bis auf die Integration von Druckregler 22 und Lufttrockner 12 stimmen Aufbau und Wirkungsweise der Druckluftaufbereitungseinrichtung nach Fig.6 mit der in Fig. 1 dargestellten überein, so daß gleiche Bauteile mit gleichen Bezugszeichen versehen sind. Zu erwähnen ist noch das Druckventil 56 im Lufttrockner 12, das bei Übersteigen eines vorgegebenen Druckes am Einlaß 13 des Lufttrockners 12 während des Trocknungsbetriebes den Behälter 50 kurzschließt und die Druckluft unter Umgehung des Behälters 50 unmittelbar an den Auslaß 14 des Lufttrockners 12 leitet.

Die Erfindung ist nicht auf die vorstehend beschriebenen Ausführungsbeispiele beschränkt. So braucht die Steuerlogik 39 nicht mit elektrischen Schaltrelais realisiert zu werden, sondern wird zweckmäßigerweise als elektronische Verknüpfungslogik konzipiert. Die Druckschalter 38,42 und 43 können auch als Schließer ausgebildet werden, die in umgekehrter Weise wie beschrieben oberhalb der eingestellten Druckschwelle schließen und unterhalb der eingestellten Druckschwelle öffnen. Dies ist in der Steuerlogik 39 entsprechend zu berücksichtigen, so daß diese in gleicher Weise wie beschrieben die Schaltsignale für das Schaltventil 41 liefert. Anstelle der beiden an den Regenerationsluftspeicher 18 angeschlossenen Druckschalter 42 und 43 kann entweder ein einziger Druckschalter mit Schalthysterese oder ein Drucksensor vorgesehen werden, der ein dem Druck im Regenerationsluftspeicher 18 proportionales Ausgangssignal an die Steuerlogik 39 liefert. Im letzten Fall könnte die Steuerlogik 39 einen Schmitt-Trigger enthalten, der bei Überschreiten seiner oberen und seiner unteren Schaltschwelle jeweils ein Schaltsignal mit entgegengesetzter Wirkung an das Schaltventil 41 liefert. Mittels der Steuerlogik 39 ist es möglich, während der Abschaltphase des Druckreglers 22 eine mehrfache Regeneration des Lufttrockners 12 in verschiedener Weise herbeizuführen. So kann der Umschaltzyklus des Lufttrockners 12 von seiner Regenerationsphase in seine Trocknungsphase über ein Zeitrelais einstellbar sein oder von einem Feuchtigkeitssensor gesteuert werden, der die Feuchte des Trocknungsmittels im Behälter des Lufttrockners 12 sensiert. Auch kann eine mehrmalige Regeneration während der Abschaltphase des Druckreglers 22 mittels eines Zählers erreicht werden, der bei Erreichen eines vorgegebenen Zählzyklus die Be- bzw. Entlüftung des Steuereingangs 15 des Lufttrockners 12 durch das Schaltventil 41 auslöst.

**Ansprüche**

1. Druckluftaufbereitungseinrichtung für Druckluftsysteme, insbesondere Druckluftbremsanlagen von Nutzfahrzeugen, mit einem Druckregler, der unterhalb einer vorgegebenen Druckschwelle ein seinen Einschaltzustand kennzeichnendes pneumatisches Einsignal und oberhalb der vorgegebenen Druckschwelle ein seinen Abschaltzustand kennzeichnendes pneumatisches Aussignal liefert, mit einem Einbehälter-Lufttrockner, der über einen pneumatischen Steuereingang von Trocknungsbetrieb in Regenerationsbetrieb und umgekehrt umschaltbar ist, mit einem mit dem Lufttrockner verbundenen Regenerationsluftspeicher, der im Trocknungsbetrieb gespannt wird und im Regenerationsbetrieb trockene Regenerationsluft an den Lufttrockner zurückliefert, und mit einem ausgangsseitig an dem Steuereingang des Lufttrockners angeschlossenen, in Abhängigkeit von dem im Regenerationsluftspeicher herrschenden Druck geschalteten Schaltventil zum Be- und Entlüften des Steuereingangs des Lufttrockners, das bei Unterschreiten eines unteren Druckgrenzwertes in eine erste Schaltstellung und bei Überschreiten eines oberen Druckgrenzwertes in eine zweite Schaltstellung umschaltet, wobei der Lufttrockner sich während des Belüftens seines Steuereingangs im Regenerationsbetrieb und während des Entlüftens seines Steuereingangs im Trocknungsbetrieb befindet, dadurch gekennzeichnet, daß das Schaltventil (41;141) eingangsseitig an dem Auslaß (14) des Lufttrockners (12) angeschlossen ist und daß mit dem Druckregler (22;22') eine Verriegelungsvorrichtung (38,39;138,149) verbunden ist, die ein Belüften des Steuereingangs (15) des Lufttrockners (12) blockiert, solange der Druckregler (22;22') ein pneumatisches Einsignal liefert.

2. Einrichtung nach Anspruch 1, dadurch gekennzeichnet, daß das Schaltventil (41) als 3/2-Wegemagnetventil mit Federrückstellung ausgebildet ist, daß mindestens ein den Druck im Regenerationsluftspeicher (18) erfassender Druckschalter (42,43) vorgesehen ist und daß die Verriegelungsvorrichtung einen mit dem pneumatischen Ein- und Ausgangssignal des Druckreglers (22) beaufschlagten Druckschalter (38) und eine Steuerlogik (39) aufweist, die durch Verknüpfung der Ausgangssignale der Druckschalter (38,42,43) Schaltsignale für das 3/2-Wegemagnetventil generiert.

3. Einrichtung nach Anspruch 2, dadurch gekennzeichnet, daß an dem Regenerationsluftspeicher (18) zwei Druckschalter (42,43) angeschlossen sind, von denen der eine bei Unterschreiten des unteren Druckgrenzwertes und der andere bei Überschreiten des oberen Druckwertes anspricht und sein Ausgangssignal ändert.

4. Einrichtung nach Anspruch 1, dadurch gekennzeichnet, daß das Schaltventil (141) als pneumatisch gesteuertes 3/2-Wegeventil mit Federrückstellung ausgebildet ist, dessen pneumatischer Steuereingang an dem Regenerationsluftspeicher (18) angeschlossen, ist und daß die Verriegelungsvorrichtung einen mit dem pneumatischen Ein- und Aussignal des Druckreglers (22) beaufschlagten Druckschalter (138) und ein von dessen Ausgangssignal geschaltetes 3/2-Wegemagnetventil (149) aufweist, das in der Verbindungsleitung (40a) zwischen Eingang des 3/2-Wegeventils und Auslaß (14) des Lufttrockners (12) eingeschaltet ist.

5. Einrichtung nach einem der Ansprüche 1 - 4, dadurch gekennzeichnet, daß der Druckregler (22) ein Druckbegrenzungsventil (52) und ein vom Druck am Auslaß (14) des Lufttrockners (12) steuerbares pneumatisches 3/2-Wegeventil (55) mit einstellbarer Federrückstellung aufweist, dessen Ausgang mit dem Druckschalter (38) verbunden ist und das derart eingestellt ist, daß der Ausgang unterhalb des vorgegebenen Druckwertes entlüftet (Einsignal) und oberhalb des vorgegebenen Druckwertes belüftet (Aussignal) ist.

6. Einrichtung nach Anspruch 5, dadurch gekennzeichent, daß dem Auslaß (14) des Lufttrockners (12) ein Rückschlagventil (51) mit zum Ausgang hin gerichteter Durchflußrichtung vorgeschaltet ist, daß vor dem Eingang des Rückschlagventils (51) eine Verbindungsleitung (19) zum Regenerationsluftspeicher (18) mündet und daß der Druckregler (22) in der Weise in den Lufttrockner (12) integriert ist, daß einerseits ein Anschluß und der Steuereingang des 3/2-Wegeventils (55) mit dem Auslaß (14) des Lufttrockners (12) und andererseits das Druckbegrenzungsventil (52) mit dem Einlaß (13) des Lufttrockners (12) verbunden und zum Umschalten des Lufttrockners (12) in den Regenerationsbetrieb mit einem pneumatischen Steuereingang (54) versehen ist.

7. Einrichtung nach einem der Ansprüche 1 - 6, dadurch gekennzeichnet, daß die Druckschalter (38,42,43) als Öffner ausgebildet sind, die oberhalb der eingestellten Druckschwelle öffnen und unterhalb dieser schließen.

8. Einrichtung nach einem der Ansprüche 1 - 7, gekennzeichnet durch eine Steuerlogik (39), die das Schaltventil (41) während des Abschaltzustandes des Druckreglers (22;22′) wiederholt zum Be- und Entlüften des Steuereingangs (15) des Lufttrockners (12) umschaltet, und zwar entsprechend einer vorgebbaren Anzahl von Schaltzyklen oder nach Ablauf vorgegebener Zeitintervalle oder in Abhängigkeit von der Feuchte des Trocknungsmittels des Lufttrockners (12).

Fig.1

Fig.2

Fig.3

Fig.4

Fig.5

Fig. 6